# EUROPEAN PATENT SPECIFICATION

(11) **EP 2 294 356 B1**
(45) Date of publication and mention of the grant of the patent: **30.03.2016**
(21) Application number: 09767705.8
(22) Date of filing: 18.06.2009
(51) Int. Cl.: G01B 3/00

(54) **TEMPLATE TO HELP MOUNT INFORMATIONAL SIGNS IN PARTICULAR FOR VEHICLES**
VORLAGE ZUR MONTAGEHILFE VON KENNSCHILDERN, INSBESONDERE FÜR FAHRZEUGE
GABARIT POUR AIDER À MONTER DES PANNEAUX D'INFORMATION, EN PARTICULIER POUR DES VÉHICULES

(30) Priority: 18.06.2008 FR 0854038
(43) Date of publication of application: 16.03.2011
(73) Proprietor: Faab Fabricauto, 01440 Viriat (FR)
(72) Inventor: RUFFIN, Patrick, F-74120 Praz sur Arly (FR)
(74) Representative: HGF Limited
(86) International application number: PCT/US2009/047740
(87) International publication number: WO 2009/155396

(56) References cited:
- FR-A- 837 113
- US-A- 4 538 354

## Description

The present invention relates to the technical field of signs for presenting information that can be used in many applications and it more specifically targets informational signs such as, for example, license or registration plates for automotive vehicles without this limiting its scope. One object of the invention more specifically targets the field of mounting or applying an informational sign, for example, a license or registration plate for an automotive vehicle.

### Background

In one preferred field of application, license plates are generally fixed to the body of the vehicle using fixing rivets. Accordingly, each license plate conventionally has holes for passage of the fixing rivets. It should be noted that the position of the fixing holes is specifc to the type or model of the vehicle that the plate must equip.

Conventionally, pre-drilling these license plates so that it is easier for licensing professionals, such as garages, car care centers, new vehicle manufacturers, or DMV's, to apply such license plates is known. Given the various positions of the passage holes and the many models of plate that exist, it is difficult for these professionals to store all of these plates for economic and storage volume reasons.

FR-A-837 113 relates to a template comprising parts B and C used to control the dimensions of semi-finished part A.

### Summary

To solve this problem, one solution consists in using license plates that are not provided with pre-drilled holes in which fixing holes are made using the existing plate to be replaced, which is used to determine the position of the fixing holes. To avoid performing this tricky operation, another solution consists in directly drilling the license plate in position on the vehicle, which means extra holes are made in the body of the vehicle.

One object of the invention therefore remedies at least some of the drawbacks of the state of the art by solving the problems of storing pre-drilled informational signs and at the same time making it easier to apply these informational signs. For example, to remedy the drawbacks set forth herein before, one object of the invention proposes a template to help mount informational signs in particular on vehicles. According to at least some aspects of the invention, the template to help mount informational signs contains: (1) an upper plate and a base plate mounted in a superimposed way to define together a receiving housing for an informational sign, the housing being provided with stops for at least two contiguous sides of the informational sign to ensure the position of the informational sign in a reference position defined in a plane, and (2) a series of passage holes for a marking or drilling tool, arranged in the upper plate to open into the housing, and corresponding to fixing points for various types of informational signs.

According to a preferred embodiment, at least one series of holes is provided with a suitable identifier to find the holes corresponding to a type of informational sign.

According to another preferred embodiment, the base plate contains a series of hole openings arranged to coincide with the holes of the upper plate. Preferably, the upper plate has suitable thickness so that the holes define a guiding bushing for the tool.

According to another preferred embodiment, the housing contains three individual stops of which two ensure that one side of the informational sign presses while the other stop ensures that another side of the informational sign presses. Advantageously, the individual stops constitute means of assembly between the upper plate and the base plate. Preferably, at least the upper plate contains a central cut out ensuring access to the informational sign so that it can press against the stops. For example, at least the upper plate contains at one of its ends, a lateral cut out ensuring the prehension of the informational signs.

Various other characteristics are shown from the description made below in reference to the appended drawings that show, as non-limiting examples, embodiments of the objects of the invention.

### Brief Description of the Drawings

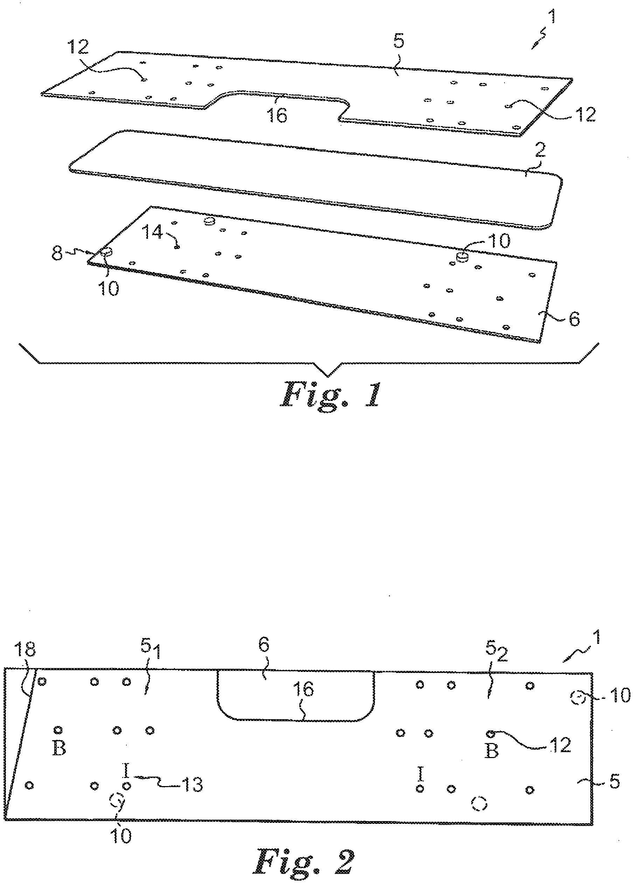

**Figure 1** is an exploded perspective view showing an example of an embodiment of a template in accordance with the invention.
**Figure 2** is a view from above of a template in accordance with the invention.
**Figure 3** is a view from above analogous to **Fig. 1** of a template in which an informational sign is positioned.
**Figure 4** is a cross-sectional view taken roughly along the axis of lines IV-IV in **Fig. 3**.
**Figure 5** is a view of an informational sign obtained using a template in accordance with the invention.

### Detailed Description

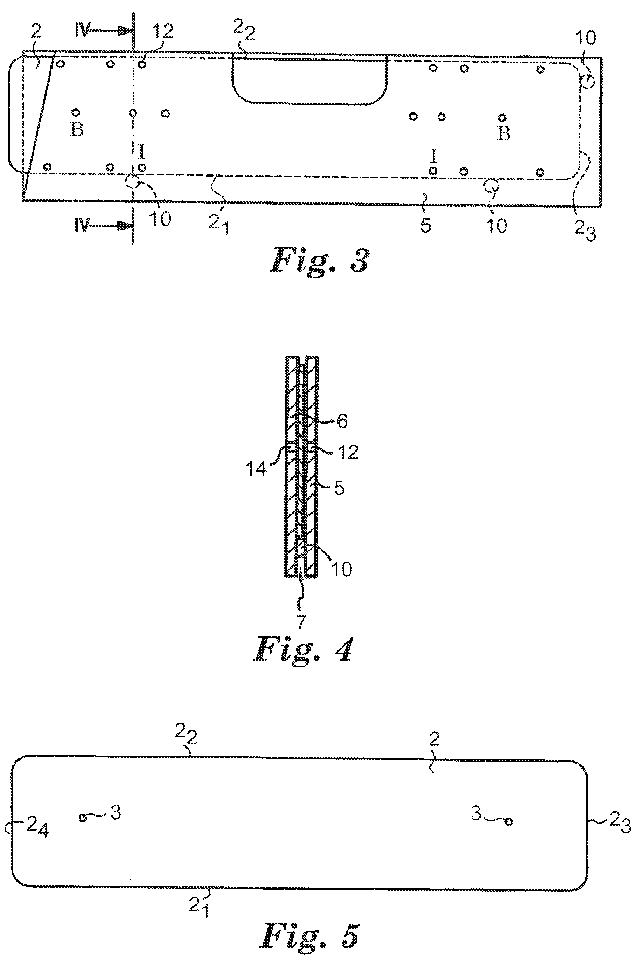

In the example illustrated, fixing points **3** correspond to passage holes for rivets but it should be noted that these fixing points **3** can correspond to a mark that serves as a reference for fixing the plate. In **Fig. 5****,** license plate **2** contains two fixing holes **3** but it is clear that the template according to this embodiment of the invention helps to make license plates **2,** as will be explained in the remainder of the description, with a different number of fixing holes **3** positioned in different places.

Conventionally, each license plate **2** has a generally rectangular shape and contains two roughly parallel lengthwise sides **2₁** and **2₂** joined together via two roughly parallel sides **2₃, 2₄** extending perpendicularly to lengthwise sides **2₁** and **2₂**. License plate **2** is typically thin, of the order of a few millimeters, depending on how it is made, for example, of plastic or metallic material.

Template **1** contains an upper plate **5** and a base plate **6** mounted in a superimposed way to define together a receiving housing **7** for a license plate **2.** These upper **5** and base **6** plates extend roughly parallel to each other being separated from each other by a distance greater than the maximum thickness of a license plate **2** intended to be placed inside housing **7.** In the example illustrated, the upper **5** and base **6** plates are maintained in a separated position by any known type of means of assembly **8.**

According to another characteristic of the object of the invention, housing **7** is provided with stops **10** for license plate **2** to ensure it is positioned in a reference position defined in a plane roughly parallel to the plane of extension of the upper **5** and base **6** plates. As is seen more specifically in **Figs. 3** and **4****,** stops **10** allow license plate **2** to be placed in a fixed or stable reference position.

According to an advantageous embodiment, stops **10** are made from three individual stops arranged to serve as stops for two contiguous sides of license plate **2.** In the example illustrated, two individual stops **10** ensure that one lengthwise side **2₁** of the plate presses while another individual stop **10** ensures that a contiguous side **2₃** presses. It follows that housing **7** is closed on two of its sides so that the insertion of license plate **2** into housing **7** can be ensured by the two other sides of the template. Accordingly, license plate **2** can be inserted between upper **5** and base **6** plates by the upper edge of the template or by the left edge of the template as illustrated in **Fig. 3****.**

Making stops **10** by individual presses positioned in determined places allows the template to receive license plates **2** having various external contours or shapes. Of course, holding license plate **2** in a reference position can be ensured by stops made in different ways.

According to one advantageous embodiment, individual stops **10** are made by means of assembly **8.** Each individual stop **10** is formed by the body of an element of assembly of screw-, rivet- or axle-type fixed by any suitable means on the two plates **5, 6.**

In accordance with the invention, upper plate **5** contains a series of passage holes **12** for a marking or drilling tool, arranged to open into housing **7.** It is understood that holes **12** correspond to different fixing points **3** for various types or models of license plates **2** when each of them occupies the reference position defined by stops **10.** In other words, the position of passage holes **12** is determined as a function of the reference position of the license plate, defined by stops **10.**

Preferably, at least one series of holes **12** is provided with the same identifier **13** that finds holes **12** corresponding to fixing points **3** for a license plate **2** of a given type. In other words, holes **12** corresponding to fixing points for a license plate are found by the same identifier. It should be noted that a given hole **12** can contain several identifiers **13** insofar as this hole **12** can be used to help to make a fixing point **3** belonging to several types of license plate **2.** In the example illustrated, the identifier **13** is a letter but it is clear that the identifier can be any symbol or sign that means the position holes for a given type of license plate can easily be found.

Of course, upper plate **5** contains a surface that can cover license plate **2** placed in the reference position, so that passage holes **12** corresponding to the fixing points for most license plates available on the market can be made. Accordingly, as is more specifically clear in the Figures, upper plate **5** contains side areas **5₁** and **5₂** that can completely cover license plate **2** when the latter occupies its reference position.

Holes **12** are arranged to allow the passage of a license plate **2** marking tool or preferably a license plate **2** drilling tool. In the scope of using a drilling tool, it should be noted that in some preferred embodiments, upper plate **5** has suitable and sufficient thickness for holes **12** to define a guiding bushing for the drilling tool such as a drill. According to this preferred embodiment, it should be noted that base plate **6** also contains hole openings **14** arranged to coincide with passage holes **12** for the upper plate. Hole openings **14** accordingly constitute holes for removal or ejection of the material of the drilled license plate **2.**

According to a preferred variant of the invention, upper plate **5** contains a central cut out **16** whereby license plate **2** is not covered by upper plate **5,** in particular in its central portion that does not generally contain fixing points. This cut out **16** accordingly ensures access to license plate **2** so that it can press on stops **10.** Accordingly, during the drilling or marking operation, license plate **2** can be held manually by the operator by pressing on stops **10.**

According to a preferred embodiment, upper plate **5** also contains at one of its ends a lateral cut out **18** ensuring the prehension of a license plate **2** when it is inserted into or removed from housing **7.**

Use of template **1** in accordance with the invention flows directly from the description that precedes. A license plate **2** is indeed inserted into housing **7** so as to press against stops **10.** As a function of the license plate used, the operator finds identifiers **13** for example **B** in the illustrated example, passage holes **12** corresponding the position of fixing points **3** assigned to the license plate. The operator can then easily mark or preferably drill the license plate by successively engaging the tool in passage holes **12** referenced **B** in upper plate **5.** It should be noted that the operator can easily position license plate **2** in its reference position by holding it by one hand pressing on stops **10.** This pre-marked or pre-drilled license plate **2** can then easily be removed from template **1** to be mounted on a vehicle.

Template **1** according to the invention accordingly makes the operation of pre-drilling license plates **2** easier and does so for all existing models. License plate **2** is held pressed against base plate **6** to prevent its deformation during the drilling operation. It should be noted that template **1** according to the invention can be adapted for the arrival of a new plate model with fixing holes positioned in new places. In this case, upper plate **5,** and even base plate **6,** can have holes **12** and **14** drilled respectively in new places to allow marking or drilling of these new license plates. Template **1** also has the advantage of being able to verify that the position of the characters on the plate is outside fixing holes **3.**

The invention is not limited to the examples described and represented because various changes can be made without going outside its scope, as defined by the claims.

## Claims

1. A template to help mount informational signs (2) such as license plates in particular on vehicles, **characterized in that** it contains:
an upper plate **(5)** and a base plate **(6)** mounted in a superimposed way to define together a receiving housing **(7)** for an informational sign,
the housing **(7)** being provided with three individual stops **(10)** for at least two contiguous sides of the informational sign to ensure the position of the informational sign in a reference position defined in a plane, and of which two individual stops **(10)** are arranged to press against a side of the informational sign and the third individual stop **(10)** is arranged to press against another side of the informational sign, the individual stops **(10)** further constituting means of assembly **(8)** between the upper plate **(5)** and the base plate **(6),** and
a series of passage holes **(12)** for a marking or drilling tool, arranged in the upper plate **(5)** to end in the housing **(7),** and corresponding to the fixing points for different types of informational signs.

2. The template according to claim 1, **characterized in that** at least one series of holes **(12)** is provided with a suitable identifier **(13)** to find the holes corresponding to a type of informational sign.

3. The template according to claim 1 or 2, **characterized in that** the base plate **(6)** contains a series of hole openings **(14)** arranged to coincide with the holes **(12)** in the upper plate.

4. The template according to claim 1 or 2, **characterized in that** the upper plate **(5)** has suitable thickness for the holes **(12)** to define a guiding bushing for the tool.

5. The template according to one of claims 1 or 4, **characterized in that** at least the upper plate **(5)** contains a central cut out **(16)** ensuring access to the informational sign so that it can press on the stops (**10**).

6. The template according to claim 1, 4 or 5, **characterized in that** at least the upper plate **(5)** contains at one of its ends, a lateral cut out **(18)** ensuring the prehension of the informational sign.

## Patentansprüche

1. Schablone zur Erleichterung der Anbringung von Hinweisschildern **(2),** beispielsweise von Kennzeichenschildern insbesondere bei Fahrzeugen, **dadurch gekennzeichnet, dass** sie Folgendes enthält:
eine obere Platte **(5)** und eine Grundplatte **(6),** die übereinander angebracht sind, um zusammen ein Aufnahmegehäuse **(7)** für ein Hinweisschild zu bilden,
wobei das Gehäuse **(7)** mit drei einzelnen Anschlägen **(10)** an mindestens zwei ununterbrochene Seiten des Hinweisschildes versehen ist, um die Position des Hinweisschildes in einer Referenzposition zu gewährleisten, die in einer Ebene definiert ist, und von denen zwei einzelne Anschläge **(10)** so angeordnet sind, dass sie gegen eine Seite des Hinweisschildes drücken, und der dritte einzelne Anschlag **(10)** so angeordnet ist, dass er gegen eine weitere Seite des Hinweisschildes drückt, wobei die einzelnen Anschläge **(10)** ferner Montagemittel **(8)** zwischen der oberen Platte **(5)** und der Grundplatte **(6)** bilden, und
eine Aufeinanderfolge von Durchgangslöchern **(12)** für ein Markierungs-oder Bohrwerkzeug, die in der oberen Platte **(5)** angeordnet sind und im Gehäuse **(7)** enden und den Befestigungspunkten für unterschiedliche Arten von Hinweisschildern entsprechen.

2. Schablone nach Anspruch 1, **dadurch gekennzeichnet, dass** mindestens eine Aufeinanderfolge von Löchern **(12)** mit einer geeigneten Kennzeichnung **(13)** versehen ist, um die Löcher zu finden, die einer Hinweisschildart entsprechen.

3. Schablone nach Anspruch 1 oder 2, **dadurch gekennzeichnet, dass** die Grundplatte **(6)** eine Aufeinanderfolge von Lochöffnungen **(14)** enthält, die so angeordnet sind, dass sie mit den Löchern **(12)** in der oberen Platte übereinstimmen.

4. Schablone nach Anspruch 1 oder 2, **dadurch gekennzeichnet, dass** die obere Platte **(5)** eine geeignete Dicke für die Löcher **(12)** aufweist, um eine Führungsbuchse für das Werkzeug zu definieren.

5. Schablone nach einem der Ansprüche 1 oder 4, **dadurch gekennzeichnet, dass** zumindest die obere Platte **(5)** einen zentralen Ausschnitt **(16)** enthält, der den Zugang zum Hinweisschild gewährleistet, sodass es auf die Anschläge **(10)** drücken kann.

6. Schablone nach Anspruch Ziffer 1, 4 oder 5, **dadurch gekennzeichnet, dass** zumindest die obere Platte **(5)** an einem ihrer Enden einen seitlichen Ausschnitt **(18)** aufweist, der das Ergreifen des Hinweisschildes gewährleistet.

## Revendications

1. Gabarit d'assistance au montage de panneaux d'information **(2)** tels que des plaques d'immatriculation, en particulier sur des véhicules, **caractérisé en ce qu'**il comporte :
une plaque supérieure **(5)** et une plaque de base **(6),** montées d'une manière superposée pour définir conjointement un logement de réception **(7)** pour un panneau d'information,
le logement **(7)** étant pourvu de trois butées individuelles **(10)** pour au moins deux côtés contigus du panneau d'information pour assurer la position du panneau d'information dans une position de référence définie dans un plan, et dont deux butées individuelles **(10)** sont disposées pour appuyer contre un côté du panneau d'information et la troisième butée individuelle **(10)** est disposée pour appuyer contre un autre côté du panneau d'information, les butées individuelles **(10)** constituant en outre un moyen d'assemblage **(8)** entre la plaque supérieure **(5)** et la plaque de base **(6),** et
une série de trous de passage **(12)** pour un outil de marquage ou de forage, disposés dans la plaque supérieure **(5)** pour se terminer dans le logement **(7),** et correspondant aux points de fixation pour différents types de panneaux d'information.

2. Gabarit selon la revendication 1, **caractérisé en ce qu'**au moins une série de trous **(12)** est pourvue d'un identifiant approprié **(13)** pour trouver les trous correspondant à un type de panneau d'information.

3. Gabarit selon la revendication 1 ou 2, **caractérisé en ce que** la plaque de base **(6)** contient une série de trous ouverts **(14)** disposés pour coïncider avec les trous **(12)** dans la plaque supérieure.

4. Gabarit selon la revendication 1 ou 2, **caractérisé en ce que** la plaque supérieure **(5)** a une épaisseur appropriée pour permettre aux trous **(12)** de définir un manchon de guidage pour l'outil.

5. Gabarit selon l'une des revendications 1 ou 4, **caractérisé en ce qu'**au moins la plaque supérieure **(5)** contient une découpe centrale **(16)** assurant un accès au panneau d'information de sorte qu'il peut appuyer sur les butées **(10).**

6. Gabarit selon la revendication 1, 4 ou 5, **caractérisé en ce qu'**au moins la plaque supérieure **(5)** contient à l'une de ses extrémités, une découpe latérale **(18)** assurant la préhension du panneau d'information.
